# EUROPEAN PATENT SPECIFICATION

(11) **EP 3 335 600 B1**
(45) Date of publication and mention of the grant of the patent: **17.02.2021**
(21) Application number: 17833393.6
(22) Date of filing: 03.07.2017
(51) Int. Cl.: A47J 31/56, A23C 11/10, A47J 27/62, A47J 27/21

(54) **ANTI-OVERFLOWING CONTROL METHOD FOR FOOD PROCESSOR AND FOOD PROCESSOR**
ÜBERLAUFSCHUTZSTEUERUNGSVERFAHREN FÜR EINE KÜCHENMASCHINE UND KÜCHENMASCHINE
PROCÉDÉ DE COMMANDE ANTI-DÉBORDEMENT POUR ROBOT ALIMENTAIRE MÉNAGER ET ROBOT ALIMENTAIRE MÉNAGER

(30) Priority: 27.07.2016 CN 201620806260 U; 27.07.2016 CN 201610605755
(43) Date of publication of application: 20.06.2018
(73) Proprietor: Guangdong Midea Consumer Electrics Manufacturing Co., Ltd., Foshan City, Guangdong 528311 (CN); Midea Group Co., Ltd., Foshan, Guangdong 528311 (CN)
(72) Inventor: YU, Sanying, Foshan City Guangdong 528311 (CN); YIN, Kunren, Foshan City Guangdong 528311 (CN); TANG, Yan, Foshan City Guangdong 528311 (CN)
(74) Representative: RGTH
(86) International application number: PCT/CN2017/091497
(87) International publication number: WO 2018/019090

(56) References cited:
- WO-A1-02/100223
- WO-A1-2006/070334
- WO-A1-2015/084294
- CN-A- 102 835 458
- CN-A- 102 987 925
- CN-A- 104 597 944
- CN-A- 104 799 686
- CN-A- 105 030 053
- CN-U- 203 376 655
- US-A1- 2008 302 780
- US-A1- 2011 067 575
- DATABASE WPI Week 201206 Thomson Scientific, London, GB; AN 2012-A53693 XP002786175, -& CN 102 283 564 A (ZHEJIANG SUPOR ELECTRICAL APPL CN) 21 December 2011 (2011-12-21)

## Description

### TECHNICAL FIELD

The present disclosure relates to a field of cooking appliances, and in particular to an anti-overflow control method for controlling a food processor and the food processor thereof.

### BACKGROUND

With the development of science and technology, the food processor, especially the liquid heating food processor obtains comprehensive application. For the conventional food processors, judging whether the water is boiling is usually determined according to the normal altitude. When the food processor is used in high altitude regions such as a plateau area, a low pressure makes the boiling point decrease, the boiling point is likely misjudged by the food processor that keeps heating accordingly, resulting in the overflow of the mixture of water and food in the food processor.

In the document WO 2015/084 294 A1 a kettle for air-craft usage that detects and measures a change in temperature is described. Then the temperature is not rising any more for several successive measurements, the kettle shuts off since the boiling point of the liquid is reached.

The US 2008/302 780 A1 discloses a water calibration method for an electric kettle that provides a temperature sensor and a processor and detects the temperature of the water and the change during the heating process. The change of the current heating cycle is then compared with the curve of a previous cycle and when the rate change is minimized the heating power is cut off when the water boils.

In CN 102 283 564 A a rice cooker control method for different altitudes is disclosed, where a constant boiling point T2 is determined and stored in the unit and takes it as the default boiling point temperature.

The document WO 02 100 223 A1 describes an electric kettle with a heating element and a temperature detection. In an electronic memory predefined characteristic data is stored and compared to the measured temperature. When a maximum temperature is surpassed, the heating element is switched off.

### SUMMARY

The present disclosure relates to an anti-overflow control method for controlling a food processor and the food processor thereof, aims to solve a problem that a boiling point misjudged by the food processor results in an overflow of a mixture of water and food in the food processor.

To realize the above aims, the present disclosure relates to an anti-overflow control method for controlling a food processor, including the features of claim 1.

Preferably, when the food processor is provided with a specialized button for starting a process of detecting the boiling point, the specialized button is triggered, controlling the food processor to generate the enabled instruction for detecting a boiling point.

When the food processor is only provided with normal functional buttons, and the normal functional buttons as combined are triggered or a single functional button is long-pressed, controlling the food processer to generate the enabled instruction for detecting the boiling point.

When a wireless connection is used between the food processer and a corresponding mobile terminal, and a trigger instruction sent by the mobile terminal is detected, controlling the food processor to generate the enabled instruction for detecting the boiling point.

If the food processor generates the enabled instruction for detecting the boiling point based on external actions during the preset time period, the pre-stored process for detecting the boiling point is started to obtain the boiling point of the water at the current location of the food processor, including:

if the food processor generates the enabled instruction for detecting the boiling point based on external actions during the preset time period, the food processor is controlled to heat the water inside the food processor;

detecting temperature changes of the water inside the food processor, when detecting the temperature of the water inside the food processor is invariable during a preset period, the temperature is obtained as a constant temperature.

In this case, an invariable temperature is regarded as the boiling point of the water at the current location of the food processor.

The boiling point of the water at the current location of the food processor is regarded as the current boiling point of the water.

Preferably, before the step of when detecting the variable temperatures of the water reach the current boiling point of the water, the food processor is controlled to stop heating further includes:

when detecting a difference between the variable temperatures of the water and the current boiling point of the water, the food processor is controlled to reduce heating power.

### BRIEF DESCRIPTION OF THE ACCOMPANYING DRAWINGS

Fig. 1 is a connection diagram of the food processor according to the first embodiment of the present disclosure;
Fig. 2 is a sectional view of the food processor according to the first embodiment of the present disclosure;
Fig. 3 is a flow diagram of the anti-overflow control method for controlling the food processor according to the first embodiment of the present disclosure;
Fig. 4 is a detailed flow diagram showing the step of if the food processor generates the enabled instruction for detecting a boiling point based on external actions during the preset time period, a pre-stored process for detecting the boiling point is started, to obtain the boiling point of water at the current location of the food processor in the anti-overflow control method for controlling the food processor according to the second embodiment of the present disclosure;
Fig. 5 is a detailed flow diagram showing the step of controlling the food processor to heat water inside the food processor based on the current boiling point of the water in the anti-overflow control method for controlling the food processor according to the third embodiment of the present disclosure;
Fig. 6 is a block diagram of the main control chip in the food processor according to the first embodiment of the present disclosure;
Fig. 7 is a block diagram of the main control chip in the food processor according to an optional embodiment of the present disclosure;
Fig. 8 shows a detailed block diagram of the process starting module in the main control chip in the food processor according to the second embodiment of the present disclosure;
Fig. 9 shows a detailed block diagram of the first heating execution module in the main control chip in the food processor according to the third embodiment of the present disclosure;
Objective achieving, function features, and advantages of the present disclosure are further described with reference to the embodiments and the accompany drawings.

### DETAILED DESCRIPTION OF ILLUSTRATIVE EMBODIMENTS

It should be understood that the specific embodiments described below are only used to explain the present disclosure and are not intended to limit the present disclosure.

It is to be understood that, all the directional instructions in the present disclosure (such as top, down, left, right, front, back......) can only be used for explaining relative position relations, moving condition of the elements under a special form (referring to figures), and so on, if the special form changes, the directional instructions changes accordingly. In addition, the descriptions, such as the "first", the "second" in the present disclosure, can only be used for describing the aim of description, and cannot be understood as indicating or suggesting relative importance or impliedly indicating the number of the indicated technical character.

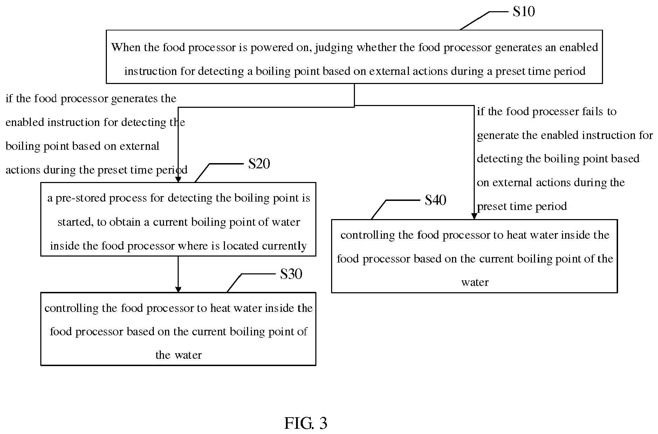

In order to interpret the present disclosure better, an anti-overflow control method for controlling the food processor is disclosed, in the anti-overflow control method for controlling the food processor according to the first embodiment, with reference to Fig. 3, the method comprises:

Step S10, when the food processor is powered on, judging whether the food processor generates an enabled instruction for detecting a boiling point based on external actions during a preset time period;

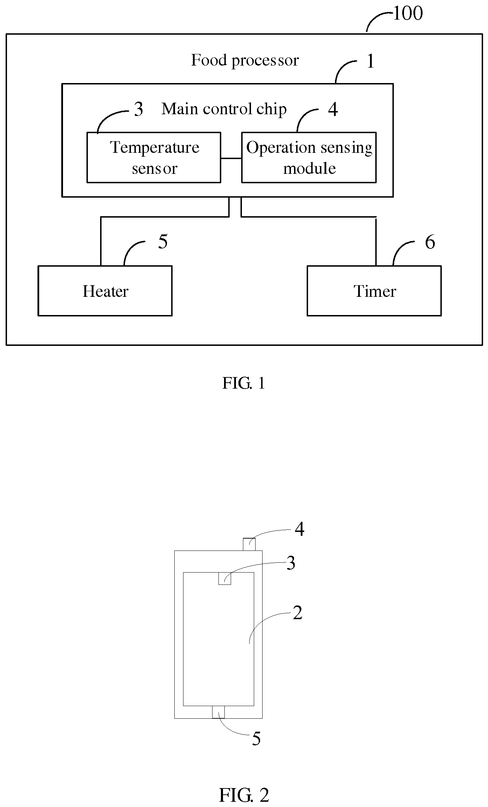

With reference to Fig. 1 and Fig. 2, the food processor 100 is a soybean milk mixing machine, a cell wall breaking machine or a blender. The food processor 100 includes a main control chip 1, a heating chamber 2 for receiving the water and food, a temperature sensor 3 and a heater 5. Optionally, the main control chip 1 may include a timer 6 and an operation sensing module 4, a temperature sensor 3 for detecting temperatures inside the heating chamber 2. The temperature sensor 3, the operation sensing module 4, the timer 6 and the heater 5 are electrically connected with the main control chip 1. The heater 5 is configured for heating the heating chamber 2. The main control chip 1 controls the heater 5, the temperature sensor 3, the operation sensing module 4 and the timer 6 in the food processor 100.

Step S20, if the food processor generates the enabled instruction for detecting the boiling point based on external actions during the preset time period, a pre-stored process for detecting the boiling point is started, to obtain the boiling point of water at the current location of the food processor;

When the main control chip 1 detects the food processor is powered on and the timer 6 starts to count, the main control chip 1 detects whether the operation sensing module 4 in the food processor generates a control instruction based on external actions that may be user' press operation or touch operation, judging whether the operation sensing module 4 generates the control instruction based on external actions during a preset time period counted by the timer 6. In which, the operation sensing module 4 may be an inductive circuit and physical keys or virtual keys as combined, the virtual keys are visualized and shown on specific areas of the display screen. If the main control chip 1 detects that the operation sensing module 4 has generated the control instruction during a preset time period, then the control instruction is analyzed to judge whether the control instruction matches up with the enabled instruction for detecting the boiling point, if it does, the main control chip 1 starts the preset process of detecting the boiling point to obtain the current boiling point of the water at the current location of the food processor. The food processor further includes a storage unit, configured for storing the current boiling point of the food processor, which may allow the food processor to heat next time; if it doesn't, that is the control instructions are normal instructions except for the enabled instruction for detecting the boiling point, the main control chip 1 is unresponsive.

Step S30, the food processor is controlled to heat water inside the food processor based on the current boiling point of the water;

After the main control chip 1 detects the boiling point of the water at the current location of the food processor, that is after the main control chip 1 obtains the current boiling point of the water, the heater is controlled to heat the water inside the heating chamber 2 of the food processor, which means, when uses want to detest the boiling point at the current location of the food processor, only need add water into the heating chamber 2 of the food processor.

Step S40, if the food processer fails to generate the enabled instruction for detecting the boiling point based on external actions during the preset time period, the food processer is controlled to heat water inside the food processor based on a pre-stored boiling point in the food processor.

If main control chip 1 does not detect that the food processor has generated the enabled instruction for detecting the boiling point based on external actions during the preset time period, it means users have not functioned the food processor to detest the current boiling point of the water, and hence the main control chip 1 controls the heater to heat the food immersed in the water of the food processor.

In the embodiment, when the food processor is powered on, recognizing the control instruction generated by the food processor based on external actions during the preset time period, if the control instruction has been recognized, the pre-stored process of detecting the boiling point in the food processor to heat the water inside. Therefore only after the enabled instruction for detecting the boiling point has been detected by the food processor, the current boiling point is detected, avoiding the food processor to misjudge the boiling point resulting in continuous heating, avoiding overflow of the mixture of water and food in the food processor accordingly.

Optionally, when the food processor is provided with a specialized button for starting the process of detecting the boiling point, the specialized button is triggered, controlling the food processor to generate the enabled instruction for detecting a boiling point.

That means, the operation sensing module 4 of the food processor includes a sensing circuit and a specialized button for starting the process of detecting the boiling point, the specialized button may be virtual buttons or physical buttons. When the sensing circuit detects the specialized button is triggered, the food processor generates the enabled instruction for detecting the boiling point. The specialized button may be located outside the food processor.

When the food processor is only provided with normal functional buttons, and the normal functional buttons as combined are triggered or a single functional button is long-pressed, controlling the food processer to generate the enabled instruction for detecting boiling point.

That means, the operation sensing module 4 of the food processor includes a sensing circuit and a normal functional button, the normal functional button may be a virtual button or a physical button. When the sensing circuit detects the normal functional buttons as combined are triggered or a single functional button is long-pressed, the enabled instruction for detecting boiling point is generated. For instance, the food processor has three normal functional buttons: mode A, mode B and mode C. When the two functional buttons mode A and mode B as combined are triggered simultaneously, the operation sensing module 4 generates the enabled instruction for detecting the boiling point. Meanwhile, the normal functional buttons may be set outside the food processor.

When a wireless connection is used between the food processer and a corresponding mobile terminal, and a trigger instruction sent by the mobile terminal is detected, controlling the food processor to generate the enabled instruction for detecting the boiling point.

That means, the operation sensing module 4 includes a sensing circuit and a wireless module. When the sensing circuit detects, the wireless module connected with external mobile terminals receives trigger instructions sent by the external mobile terminals, the food processor generates the enabled instruction for detecting the boiling point.

In the embodiment, a wide variety of operation sensing modules are disclosed, that is a wide variety of ways to generate the enabled instruction for detecting the boiling point, which riches scenarios of generating the enabled instruction for detecting the boiling point, and provides users diversification of the operations on the pre-stored process of detecting the boiling point in the food processor.

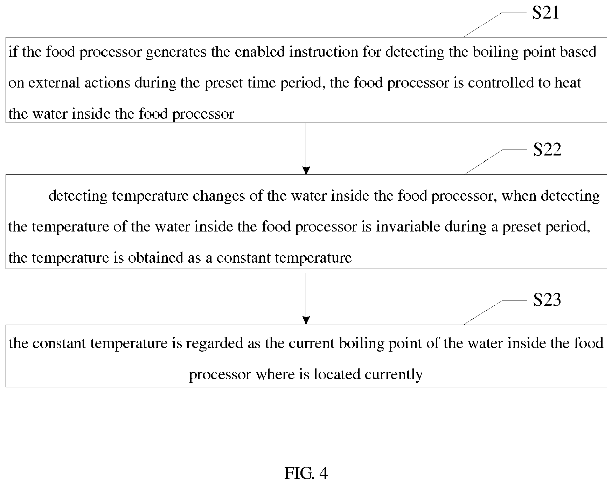

Furthermore, a second embodiment of providing the anti-overflow control method for controlling the food processer is disclosed according the first embodiment, with reference to Fig. 4, in the second embodiment, the step S20 includes:
Step S21, when the food processor generates the enabled instruction for detecting the boiling point based on external actions during the preset time period controlling the food processor to heat the water inside the food processor;
Step S22, detecting temperature changes of the water inside the food processor, when detecting the temperature of the water inside the food processor is invariable during a preset period, the temperature is obtained as a constant temperature;
Step S33, the boiling point of the water at the current location of the food processor is regarded as the current boiling point of the water.

When the main control chip 1 determines that the operation sensing module 4 generates the enabled instruction for detecting the boiling point based on external actions during the preset time period, the main control chip 1 controls the heater to heat the water inside the heating chamber 2 of the food processor. The main control chip 1 controls the temperature sensor to detect temperature changes of the water inside the heating chamber 2, when the main control chip 1 detects the temperature of the water inside the heating chamber 2 is invariable during the preset period, the temperature is obtained as a constant temperature. The main control chip 1 regards the boiling point of the water at the current location of the food processor as the current boiling point. Finally, the current boiling point is obtained.

In the embodiment, when it is determined that the food processor generates the enabled instruction for detecting the boiling point based on external actions during the preset time period, the heater is controlled to heat the water inside the heating chamber, detecting the temperature of water inside the heating chamber 2 in real time. When it is determined that the temperature of water inside the heating chamber 2 reaches a preset temperature that is less than the boiling point of water in plateau areas, judging whether the temperature of the water inside the heating chamber 2 is invariable in the preset period, such as 5s, if detecting the temperature of the water inside the heating chamber 2 is invariable in the preset period, it means the water was already boiled, then obtains the invariable temperature as the current boiling point of the water at the current location of the food processor, which is a relatively simple way to obtain the current boiling point of the water at the current location of the food processor.

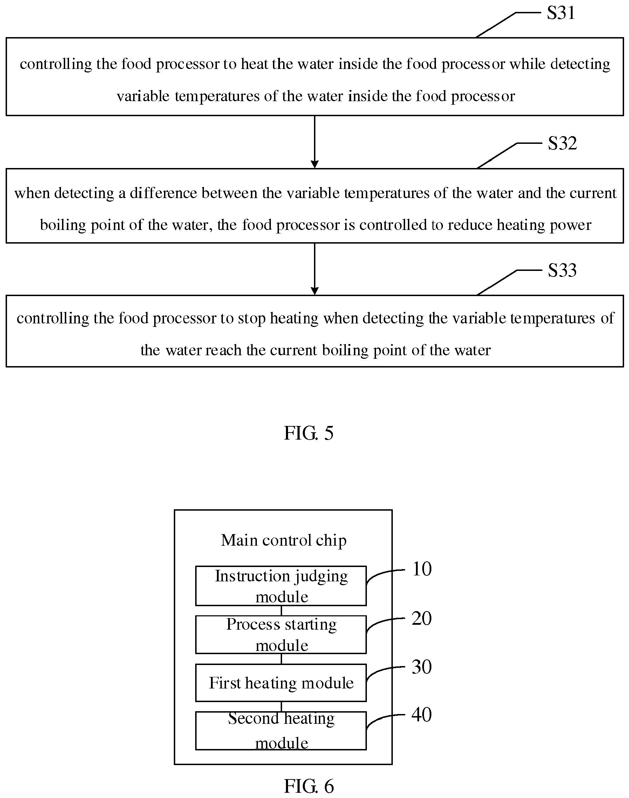

Furthermore, the anti-overflow control method for controlling the food processor is disclosed according to the first embodiment of the present disclosure, with reference to Fig. 5, in the third embodiment, the current boiling point of the water inside the food processor is regarded as the current boiling point.

The step S30 includes:
Step S31, controlling the food processor to heat the water inside the food processor while detecting variable temperatures of the water inside the food processor.
Step S32, when detecting a difference between the variable temperatures of the water and the current boiling point of the water, the food processor is controlled to reduce heating power.
Step S33, controlling the food processor to stop heating when detecting the variable temperatures of the water reach the current boiling point of the water.

After the main control chip 1 of the food processor obtains the current boiling point of the water, the heater is controlled to heat the water inside the heating chamber based on the variable temperature of the water detected by the temperature sensor. When the main control chip 1 detects a difference between the variable temperatures of the water and the current boiling point of the water, the heater is controlled to reduce heating power so as to continue heating the heating chamber 2. When the main control chip 1 detects the variable temperatures of the water reach the current boiling point of the water, the heater is controlled to stop heating.

In the embodiment, when the current boiling point of the water is obtained, the food processor is controlled to heat the water inside by using a relatively big power, such as the related power, while detect the temperature changes in the food processor to obtain variable temperatures. Along with the increasing of the variable temperatures, when detecting the variable temperatures reach the current boiling point of the water, the food processor is controlled to stop heating, avoiding the water boiling to overflow after a long period of time, accordingly an anti-overflow control method for controlling the food processor during heating, based on the current boiling point is provided.

Moreover, according to the preset boiling point of the water, the principle of controlling the food processor to heat the water and the process of the food process heating the water based on the current boiling point are basically the same.

A food processor is further disclosed, in the first embodiment, the food processor includes a main control chip, with reference to Fig. 6, the main control chip includes:
An instruction judging module 10, is configured for, when the food processor is powered on, judging whether the food processor generates an enabled instruction for detecting the boiling point based on external actions during a preset time period.

With reference to Fig. 1 and Fig. 2, the food processor 100 is a soybean milk mixing machine, a cell wall breaking machine or a blender. The food processor 100 includes a main control chip 1, a heating chamber 2 for receiving the water and food, a temperature sensor 3, an operation sensor 3, an operation sensing module 4, a heater 5 and a timer 6. The temperature sensor 3 is configured for detecting the temperature in the heating chamber 2. The temperature sensor 3, the operation sensing module 4, the timer 6 and the heater 5 are all electrically connected with the main control chip 1. The heater 5 is configured for heating the heating chamber 2, the main control chip 1 controls the heater 5, the temperature sensor 3, the operation sensing module 4 and the time 6.

The process starting module 20, is configured for, if the food processor generates the enabled instruction for detecting the boiling point based on external actions during the preset time period, the pre-stored process for detecting the boiling point is started, to obtain the boiling point at the current location of the food processor.

The instruction judging module 10 detects when the food processor is powered on, the timer is started to count, the instruction judging module 10 judges whether the operation sensing module of the food processor generates an enabled instruction for detecting the boiling point based on external actions during a preset time period, in which, the external actions may be the user's pressing operation or touching screen operation; judging whether the operation sensing module generates the enabled instruction for detecting the boiling point based on external actions during the preset time period, in which, the operation sensing module may be the combination of the sensing circuit and the physical buttons or virtual buttons that are visualized and shown on specific areas of the display screen. If the instruction judging module 10 detects the controlling instruction generated by the operation sensing module during a preset time period, the process starting module 20 analyses the controlling instruction and judges whether the controlling instruction matches up with the enabled instruction for detecting the boiling point, if it does, the process starting module 20 starts the preset process of detecting the boiling point to obtain the current boiling point of the water at the current location of the food processor. The food processor further includes a storage unit, configured for storing the current boiling point of the food processor, which may allow the food processor to heat next time; if it doesn't, that is the control instructions are normal instructions except for the enabled instruction for detecting the boiling point, the process starting module 20 is unresponsive.

A first heating execution module 30, is configured for controlling the food processor to heat water inside the food processor based on the boiling point of the water at the current location of the food processor.

After the process starting module 20 detects the current boiling point of the water at the current location of the food processor, that is the process starting module 20 obtains the current boiling point of the water, the first heating execution module 30 controls the heater to heat the water inside the food processor, that means, when the users need to detect the current boiling point of the water at the current location of the food processor, only water needs to be injected into the heating chamber of the food processor.

The second heating execution module 40, is configured for if the food processer fails to generate the enabled instruction for detecting the boiling point based on external actions during the preset time period, controlling the food processer to heat the water inside the food processor based on a pre-stored boiling point in the food processor.

If the instruction judging module 10 fails to detect the operation sensing module of the food processor generates the controlling instruction based on external actions during a preset time period, it means users have not functioned the food processor to detest the current boiling point of the water; when there is no need of detecting the boiling point again, and the second heating execution module 40 controls the heater to heat the food immersed in the water of the food processor according to the pre-stored boiling point of the water.

In the embodiment, when the food processor is powered on, judging whether the food processor generates an enabled instruction for detecting the boiling point based on external actions during a preset time period. If the food processor generates the enabled instruction for detecting the boiling point based on external actions during the preset time period, the pre-stored process for detecting the boiling point is started to obtain a boiling point of the water at the current location of the food processor, accordingly the food processor is controlled to heat the water based on the boiling point of the water at the current location of the food processor. Thus only the enabled instruction for detecting the boiling point is detected, the food processor detects the current boiling point, which avoids the food processor to misjudge the boiling point of the water and to continue heating, and hence avoids the mixture of the water and food inside the food processor to overflow.

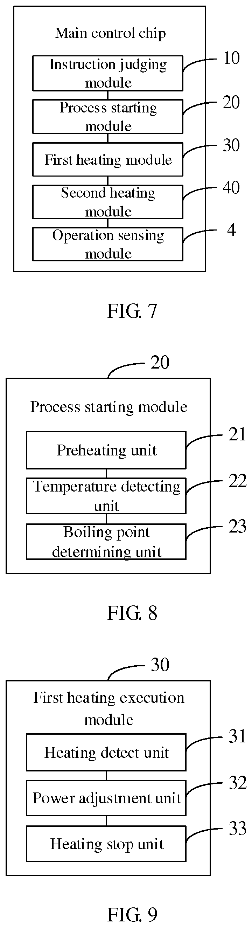

Optionally, with reference to Fig. 7, the food processor thereof further includes an operation sensing module 4.

When the food processor is provided with a specialized button for starting the process of detecting the boiling point, the specialized button is triggered, the operation sensing module 4 is functioned to generate the enabled instruction for detecting the boiling point.

That means, the operation sensing module of the food processor includes a sensing circuit and a specialized button for starting the process of detecting the boiling point. The specialized button is a virtual button or physical button, when the sensing circuit detects the specialized button is triggered, the operation sensing module 4 generates the enabled instruction for detecting the boiling point.

When the food processor is only provided with normal functional buttons, and the normal functional buttons as combined are triggered or a single functional button is long-pressed, the operation sensing module 4 is functioned to generate the enabled instruction for detecting boiling point.

That means, the operation sensing module of the food processor includes a sensing circuit and normal functional buttons. The normal functional buttons are virtual buttons or physical buttons, when the sensing circuit detects the preset normal functional buttons as combined are triggered or the single functional button is long-pressed, the enabled instruction for detecting the boiling point is generated. For instance, the food processor has three normal functional buttons: mode A, mode B and mode C. When the two functional buttons mode A and mode B as combined are triggered simultaneously, the operation sensing module 4 is functioned to generate the enabled instruction for detecting the boiling point.

When a wireless connection is used between the food processer and a corresponding mobile terminal, and a trigger instruction sent by the mobile terminal is detected, the operation sensing module 4 is functioned to generate the enabled instruction for detecting boiling point.

That is, the operation sensing module 4 includes a sensing circuit and a wireless module, when the sensing circuit detects the wireless module set to connect with external mobile terminals receives the trigger instruction for detecting the boiling point sent by the mobile terminals, the operation sensing module 4 generates the enabled instruction for detecting the boiling point.

In the embodiment, a wide variety of operation sensing modules are disclosed, that is a wide variety of ways to generate the enabled instruction for detecting the boiling point, which riches scenarios of generating the enabled instruction for detecting the boiling point, and provides users diversification of the operations on the pre-stored process of detecting the boiling point in the food processor.

Furthermore, the food processor thereof of the second embodiment is disclosed based on the first embodiment, with reference to Fig. 8, the process starting module 20 includes:
a preheating unit 21, being configured for, when the food processor generates the enabled instruction for detecting the boiling point based on external actions during the preset time period controlling the food processor to heat the water inside the food processor;
a temperature detecting unit 22, being configured for, detecting temperature changes of the water inside the food processor, when detecting the temperature of the water inside the food processor is invariable during the preset period, the temperature is obtained as a constant temperature;
a boiling point determining unit 23, being configured for regarding the constant temperature as the boiling point of the water at the current location of the food processor.

When the instruction judging module 10 judges whether the operation sensing module of the food processor generates an enabled instruction for detecting a boiling point based on external actions during a preset time period, a preheating unit 21 controls the heater to heat the water inside the heating chamber of the food processor, the temperature detecting unit 22 controls the temperature sensor to detect temperature changes of the water inside the food processor, when the temperature detecting unit 22 detects the temperature of the water inside the heating chamber of the food processor is invariable, the invariable temperature is obtained as the constant temperature. The boiling point determining unit 23 regards the constant temperature as the boiling point of the water at the current location of the food processor.

In the embodiment, when judging the controlling instruction is the preset enabled instruction for detecting the boiling point, the heater is controlled to heat the water inside the heating chamber, while detecting the temperatures of the water inside the heating chamber. When detecting the temperature of the water reaches a preset temperature that is less than the boiling point of water in plateau areas, judging whether the temperature of the water inside the heating chamber 2 is invariable in the preset period, such as 5s, if detecting the temperature of the water inside the heating chamber 2 is invariable in the preset period, it means the water was already boiled, then the invariable temperature is obtained as the current boiling point of the water at the current location of the food processor, which is a relatively simple way to obtain the current boiling point of the water at the current location of the food processor.

Furthermore, the food processor thereof of the third embodiment is further disclosed based on the first embodiment, with reference to Fig. 9, the boiling point of the water inside the food processor is regarded as the current boiling point.

A first heating execution module 30 includes:
a heating detect unit 31, being configured for controlling the food processor to heat the water inside the food processor while detecting variable temperatures of the water inside the food processor;
a power adjustment unit 32, being configured for when detecting a difference between the variable temperatures of the water and the current boiling point of the water, controlling the food processor to reduce heating power;
a heating stop unit 33, being configured for controlling the food processor to stop heating when detecting the variable temperatures of the water reach the current boiling point of the water.

After the process starting module 20 of the food processor obtains the current boiling point of the water, the heating detect unit 31 controls the heater to heat the water inside the food processor while detecting variable temperatures of the water inside the food processor. When the **power adjustment unit** 32 detects the difference between the variable temperatures of the water and the current boiling point of the water, the heating power is reduced while continuing heating the heating chamber. When the heating stop unit 33 detects the variable temperatures of the water reach the current boiling point of the water, the heater is controlled to stop heating.

In the embodiment, when the current boiling point is obtained, the food processor is controlled to heat the water inside by using a relatively big power, while detecting the temperature changes of the water as the variable temperatures. Along with the increasing of the variable temperatures, until when detecting a difference between the variable temperatures of the water and the current boiling point of the water, the food processor is controlled to reduce heating power, which avoids water to heat up rapidly inside the food processor because of the excessive heating power, and hence avoids the overflow of the mixture of water and food because of violent boiling. Meanwhile with the increasing of the variable temperatures, until when detecting variable temperatures reach the current boiling point, the food processor is controlled to stop heating so as to avoid the overflow because of long time boiling. In general, an anti-overflow control method is disclosed based on the current boiling point of the water.

Moreover, the principle of heating the water inside the food process is basically in line with the process of the food processor heating water based on the current boiling point according to the pre-stored boiling point of the water

## Claims

1. An anti-overflow control method for controlling a food processor that is a soybean milk mixing machine, a cell wall breaking machine or a blender comprising:
when the food processor is powered on, judging whether the food processor generates an enabled instruction for detecting a boiling point based on external actions during a preset time period (S10);
if the food processor generates the enabled instruction for detecting the boiling point based on external actions during the preset time period, a pre-stored process for detecting the boiling point is started by a process starting module 20, to obtain a current boiling point of water at the current location of the food processor (S20);
controlling the food processor to heat water inside the food processor based on the current boiling point of the water (S30);
if the food processer fails to generate the enabled instruction for detecting the boiling point based on external actions during the preset time period, controlling the food processer to heat water inside the food processor based on a pre-stored boiling point in the food processor (S40), which is the current boiling point of the water; comprising:
controlling the food processor with the main control chip 1 to heat the water inside the food processor with a heater in the heating chamber 2 while detecting variable temperatures of the water inside the food processor with a temperature sensor (S31);
when detecting the variable temperatures of the water reach the current boiling point of the water, the food processor is controlled to stop heating by the main control chip 1 (S33);
**characterized in that**
the external actions during the preset time period (S20) are user' touch operations on an operation sensing module (4), which can be an inductive circuit and virtual keys as combined, the virtual keys are visualized and shown on specific areas of the display screen.

2. The anti-overflow control method according to claim 1, **characterized in that** the anti-overflow method comprises:
when the food processor is provided with a specialized button for starting a process of detecting the boiling point, the specialized button is triggered, controlling the food processor to generate the enabled instruction for detecting the boiling point via an operation sensing module (4), which can be an inductive circuit and physical keys or virtual keys;
when the food processor is only provided with normal functional buttons, and the normal functional buttons as combined are triggered or a single functional button is long-pressed, controlling the food processer to generate the enabled instruction for detecting the boiling point;
when a wireless connection is used between the food processer and a corresponding mobile terminal, and a trigger instruction sent by the mobile terminal is detected, controlling the food processor to generate the enabled instruction for detecting boiling point.

3. The anti-overflow control method for controlling the food processor according to any one of the foregoing claims, **characterized in that**, if the food processor generates the enabled instruction for detecting the boiling point based on external actions during the preset time period, the pre-stored process for detecting the boiling point is started to obtain the boiling point of the water at the current location of the food processor (S20), comprises:
if the food processor generates the enabled instruction for detecting the boiling point based on external actions during the preset time period, the food processor is controlled to heat the water inside the food processor (S21);
detecting temperature changes of the water inside the food processor, when detecting the temperature of the water inside the food processor is invariable during a preset period, the temperature is obtained as a constant temperature (S22);
the constant temperature is regarded as the current boiling point of the water at the current location of the food processor (S23).

4. The anti-overflow control method for controlling the food processor according to claim 1, **characterized in that**, before the step of when detecting the variable temperatures of the water reach the current boiling point of the water, the food processor is controlled to stop heating (S33) further comprises:
when detecting a difference between the variable temperatures of the water and the current boiling point of the water, the food processor is controlled to reduce heating power (S32).

## Patentansprüche

1. Ein Anti-Überlauf-Steuerverfahren zum Steuern einer Küchenmaschine, das heißt, einer Sojamilchmischmaschine, einer Zellwand-Aufbrechmaschine, oder eines Mixers, umfassend:
wenn die Küchenmaschine eingeschaltet ist, Beurteilen, ob die Küchenmaschine einen aktivierten Befehl zum Erfassen eines Siedepunkts auf der Grundlage äußerer Einwirkungen während eines voreingestellten Zeitraums erzeugt (S10);
wenn die Küchenmaschine den aktivierten Befehl zum Erfassen des Siedepunkts auf der Grundlage äußerer Einwirkungen während des voreingestellten Zeitraums erzeugt, wird ein vorgespeicherter Prozess zum Erfassen des Siedepunkts durch ein Prozess-Startmodul 20 gestartet, um einen aktuellen Siedepunkt von Wasser an der aktuellen Position der Küchenmaschine zu erhalten (S20);
Steuern der Küchenmaschine, sodass Wasser in der Küchenmaschine auf Grundlage des aktuellen Siedepunktes des Wassers (S30) erhitzt wird;
wenn die Küchenmaschine den aktivierten Befehl zum Erfassen des Siedepunkts auf der Grundlage äußerer Einwirkungen während des voreingestellten Zeitraums nicht erzeugt, Steuern der Küchenmaschine, sodass das Wasser in der Küchenmaschine auf Grundlage eines vorgespeicherten Siedepunkts in der Küchenmaschine (S40), der der aktuelle Siedepunkt des Wassers ist, erhitzt wird,
umfassend
Steuern der Küchenmaschine mit dem Hauptsteuerchip 1, das Wasser in der Küchenmaschine mit einem Heizgerät in der Heizkammer 2 zu erhitzen, während variable Temperaturen des Wassers in der Küchenmaschine mit einem Temperatursensor erfasst werden (S31);
wenn festgestellt wird, dass die variablen Temperaturen des Wassers den aktuellen Siedepunkt des Wassers erreichen, wird die Küchenmaschine durch den Hauptsteuerchip 1 gesteuert, die Erwärmung zu stoppen (S33);
**dadurch gekennzeichnet, dass**
die äußeren Einwirkungen während des voreingestellten Zeitraums (S20) Berührungsvorgänge des Benutzers auf einem Betriebserkennungsmodul (4) sind, das ein induktiver Schaltkreis und virtuelle Tasten sein kann, wie kombiniert; wobei die virtuellen Tasten visualisiert und in bestimmten Bereichen des Bildschirms angezeigt werden.

2. Anti-Überlauf-Steuerverfahren gemäß Anspruch 1, **dadurch gekennzeichnet, dass** das Anti-Überlauf-Verfahren Folgendes umfasst:
wenn die Küchenmaschine mit einer speziellen Taste zum Starten eines Prozesses zum Erfassen des Siedepunkts versehen ist, und die spezielle Taste ausgelöst wird, die Küchenmaschine steuert wird, um den aktivierten Befehl zum Erfassen des Siedepunkts über ein Betriebserkennungsmodul (4) zu erzeugen, bei dem es sich um eine induktive Schaltung und physische Tasten oder virtuelle Tasten handeln kann;
wenn die Küchenmaschine nur mit normalen Funktionstasten versehen ist und die normalen Funktionstasten wie kombiniert ausgelöst werden oder eine einzelne Funktionstaste lange gedrückt wird, Steuern der Küchenmaschine, den aktivierten Befehl zum Erfassen des Siedepunkts zu erzeugen;
wenn eine drahtlose Verbindung zwischen der Küchenmaschine und einem entsprechenden mobilen Endgerät verwendet wird und ein vom mobilen Endgerät gesendeter Auslösebefehl erkannt wird, Steuern der Küchenmaschine, den aktivierten Befehl zum Erfassen des Siedepunkts zu erzeugen.

3. Anti-Überlauf-Steuerverfahren zur Steuerung der Küchenmaschine gemäß einem der vorhergehenden Ansprüche, **dadurch gekennzeichnet, dass**, wenn die Küchenmaschine den aktivierten Befehl zum Erfassen des Siedepunkts auf der Grundlage äußerer Einwirkungen während des voreingestellten Zeitraums erzeugt, der vorgespeicherte Prozess zum Erfassen des Siedepunkts gestartet wird, um den Siedepunkt des Wassers an der aktuellen Position der Küchenmaschine zu erhalten (S20), umfasst:
wenn die Küchenmaschine den aktivierten Befehl zum Erfassen des Siedepunkts auf der Grundlage äußerer Einwirkungen während des voreingestellten Zeitraums erzeugt, wird die Küchenmaschine so gesteuert, dass sie das Wasser in der Küchenmaschine erhitzt (S21);
Erfassen von Temperaturänderungen des Wassers in der Küchenmaschine, wenn die Erfassung der Temperatur des Wassers in der Küchenmaschine während einer voreingestellten Zeitraums unverändert ist, wird die Temperatur als eine konstante Temperatur erfasst (S22); die konstante Temperatur wird als der aktuelle Siedepunkt des Wassers an der aktuellen Position der Küchenmaschine betrachtet (S23).

4. Anti-Überlauf-Steuerverfahren zum Steuern der Küchenmaschine gemäß Anspruch 1, **dadurch gekennzeichnet, dass** vor dem Schritt des Erfassens, wenn die variablen Temperaturen des Wassers den aktuellen Siedepunkt des Wassers erreichen, die Küchenmaschine so gesteuert wird, dass sie das Erhitzen stoppt (S33), ferner umfasst:
wenn eine Differenz zwischen den variablen Temperaturen des Wassers und dem aktuellen Siedepunkt des Wassers erfasst wird, die Küchenmaschine so gesteuert wird, dass sie die Heizleistung reduziert (S32).

## Revendications

1. Procédé de commande anti-débordement pour la commande d'un robot de cuisine consistant en un mélangeur de lait de soja, une machine de rupture de parois cellulaires ou un mixeur, comprenant :
lorsque le robot de cuisine est allumé, la détermination de la génération, par le robot de cuisine, d'une instruction permise pour la détection d'un point d'ébullition sur la base d'actions externes pendant une période de temps prédéfinie (S10) ;
si le robot de cuisine génère l'instruction permise pour la détection du point d'ébullition sur la base d'actions externes pendant la période de temps prédéfinies, le démarrage d'un processus pré-stocké pour la détection du point d'ébullition à l'aide d'un module de démarrage de processus 20, afin d'obtenir un point d'ébullition actuel de l'eau à un emplacement actuel du robot de cuisine (S20) ;
la commande du robot de cuisine pour chauffer de l'eau à l'intérieur du robot de cuisine sur la base du point d'ébullition actuel de l'eau (S30) ;
si le robot de cuisine ne parvient pas à générer l'instruction permise pour la détection du point d'ébullition sur la base d'actions externes pendant la période de temps prédéfinie, la commande du robot de cuisine pour chauffer l'eau à l'intérieur du robot de cuisine sur la base d'un point d'ébullition pré-stocké dans le robot de cuisine (S40), lequel est le point d'ébullition actuel de l'eau ; comprenant :
la commande du robot de cuisine à l'aide de la puce de commande principale 1 pour chauffer l'eau à l'intérieur du robot de cuisine à l'aide d'un chauffage dans la chambre de chauffage 2 pendant la détection de températures variables de l'eau à l'intérieur du robot de cuisine à l'aide d'un capteur de température (S31) ;
lorsqu'il est détecté que les températures variables de l'eau atteignent le point d'ébullition actuel de l'eau, le robot de cuisine est commandé pour stopper le chauffage par la puce de commande principale 1 (S33) ;
**caractérisé en ce que**
les actions externes pendant la période de temps prédéfinie (S20) sont des opérations tactiles exécutées par un utilisateur sur un module de détection d'opérations (4), lequel peut être une combinaison d'un circuit inductif et de touches virtuelles, les touches virtuelles étant visibles et représentées dans des zones spécifiques de l'écran d'affichage.

2. Procédé de commande anti-débordement selon la revendication 1, **caractérisé en ce que** le procédé de commande anti-débordement comprend :
lorsque le robot de cuisine est doté d'un bouton spécial pour le démarrage d'un processus de détection du point d'ébullition, et que le bouton spécial est actionné, la commande du robot de cuisine pour générer l'instruction permise pour la détection du point d'ébullition par le biais d'un module de détection d'opérations (4), lequel peut consister en un circuit inductif et des touches physiques ou des touches virtuelles ;
lorsque le robot de cuisine est seulement doté de boutons fonctionnels classiques, et que les boutons fonctionnels classiques combinés sont actionnés ou qu'un seul bouton fonctionnel est soumis à une pression longue, la commande du robot de cuisine pour générer l'instruction permise pour la détection du point d'ébullition ;
lorsqu'une connexion sans fil est utilisée entre le robot de cuisine et un terminal mobile correspondant, et qu'une instruction d'actionnement envoyée par le terminal mobile est détectée, la commande du robot de cuisine pour générer l'instruction permise pour la détection du point d'ébullition.

3. Procédé de commande anti-débordement pour la commande du robot de cuisine selon l'une quelconque des revendications précédentes, **caractérisé en ce que** si le robot de cuisine génère l'instruction permise pour la détection du point d'ébullition sur la base d'actions externes pendant la période de temps prédéfinie, le processus pré-stocké pour la détection du point d'ébullition sera démarré afin d'obtenir le point d'ébullition de l'eau à l'emplacement actuel du robot de cuisine (S20), comprenant :
si le robot de cuisine génère l'instruction permise pour la détection du point d'ébullition sur la base d'actions externes pendant la période de temps prédéfinie, le robot de cuisine est commandé pour chauffer l'eau à l'intérieur du robot de cuisine (S21) ;
la détection de changements de température de l'eau à l'intérieur du robot de cuisine, lorsqu'il est détecté que la température de l'eau à l'intérieur du robot de cuisine est invariable pendant une période prédéfinie, la température est obtenue comme une température constante (S22) ;
la température constante est considérée comme le point d'ébullition actuel de l'eau à l'emplacement actuel du robot de cuisine (S23).

4. Procédé de commande anti-débordement pour la commande du robot de cuisine selon la revendication 1, **caractérisé en ce qu'**avant l'étape de commande du robot de cuisine de manière à stopper le chauffage (S33) lorsqu'il est détecté que les températures variables atteignent le point d'ébullition actuel de l'eau, celui-ci comprend en outre :
lors de la détection d'une différence entre les températures variables de l'eau et le point d'ébullition actuel de l'eau, la commande du robot de cuisine de manière à réduire la puissance de chauffage (S32).
